# EUROPEAN PATENT APPLICATION

(11) **EP 4 782 114 A1**
(43) Date of publication of application: **29.07.2026**
(21) Application number: 25808041.5
(22) Date of filing: 21.05.2025
(51) Int. Cl.: B05C 5/02, B05C 11/10, B05C 9/14, H01M 4/04, H01M 4/62

(54) **COATING DEVICE AND ELECTRODE MANUFACTURING DEVICE INCLUDING SAME**

(30) Priority: 24.05.2024 KR 20240067700
(71) Applicant: LG Energy Solution, Ltd., Seoul 07335 (KR)
(72) Inventor: LIM, Chae Ryeun, Daejeon 34122 (KR); KIM, Sang Min, Daejeon 34122 (KR); KIM, Guk Tae, Daejeon 34122 (KR); PARK, Min Gu, Daejeon 34122 (KR); MOON, Young Gyu, Daejeon 34122 (KR)
(74) Representative: Plasseraud IP
(86) International application number: PCT/KR2025/006883
(87) International publication number: WO 2025/244408

(57) **Abstract**

Disclosed herein relates to a coating device including: a coating die including a first discharge port for discharging a first coating solution; and a first shim disposed within the coating die and including a second discharge port for discharging a second coating solution, wherein the first shim includes a protruding portion protruding outside the coating die. [Claims]

## Description

### [Technical Field]

The present disclosure relates to a coating device and an electrode manufacturing device including the same.

This application claims the benefit of Korean Patent Application No. 10-2024-0067700, filed on May 24, 2024, the disclosure of which is incorporated herein by reference.

### [Background]

With the increasing development and demand for mobile devices, the demand for secondary batteries as energy sources is rapidly growing. These secondary batteries include an electrode assembly. The electrode assembly has a form where a positive electrode, a separator, and a negative electrode are laminated at least once, and the positive electrode and negative electrode are manufactured by coating a coating solution onto current collectors made of aluminum foil and copper foil, respectively. The coating solution may include an insulating solution applied onto the current collector to cover both sides of the electrode slurry (positive electrode active material slurry or negative electrode active material slurry) and/or the electrode slurry applied onto the current collector.

### [Summary]

### [Technical Problem]

The technical problem to be solved by the present disclosure is to provide a coating device and an electrode manufacturing device including the same.

### [Technical Solution]

To solve the above problem, the technical concept of the present disclosure is to provide a coating device including: a coating die including a first discharge port for discharging a first coating solution; and a first shim disposed within the coating die and including a second discharge port for discharging a second coating solution, wherein the first shim includes a protruding portion protruding outside the coating die.

In exemplary embodiments, the first shim further includes a first flow path connected to the second discharge port of the first shim, wherein a portion of the first flow path of the first shim and the second discharge port are located within the protruding portion of the first shim.

In exemplary embodiments, the coating die further includes an internal flow path for conveying the second coating solution provided from outside into the first flow path of the first shim.

In exemplary embodiments, the coating die includes a die lip having the first discharge port, wherein the protruding portion of the first shim protrudes from the die lip of the coating die.

In exemplary embodiments, the coating device further includes a coating roll supporting a substrate onto which the first coating solution and the second coating solution are applied, wherein the distance between the second discharge port of the first shim and the coating roll is smaller than the distance between the first discharge port of the coating die and the coating roll.

In exemplary embodiments, the distance by which the first shim protrudes outside the coating die is between 10 micrometers and 100 micrometers.

In exemplary embodiments, the first shim includes a hole into which a fastening member configured to fasten the first shim to the coating die is inserted, wherein the length of the first shim along a first direction of the hole is greater than the length of the first shim along a second direction of the hole, wherein the first direction is parallel to the discharge direction of the first coating solution, and the second direction is perpendicular to the first direction.

In exemplary embodiments, the coating device further includes a second shim disposed within the coating die, wherein the second shim includes a first side body and a second side body spaced apart by a manifold of the coating die accommodating the first coating solution, wherein the first shim is connected to either the first side body or the second side body.

In exemplary embodiments, the second shim and the first shim form an integral unit.

In exemplary embodiments, the first coating solution is an electrode slurry, and the second coating solution is an insulating solution.

To solve the above problem, the technical concept of the present disclosure is to provide an electrode manufacturing device including: a first coating device configured to discharge a first electrode slurry and a first insulating solution toward a first surface of a substrate; and a second coating device configured to discharge a second electrode slurry and a second insulating solution toward a second surface of the substrate, wherein the first coating device includes: a first coating die including a first discharge port for discharging the first electrode slurry; and a first spacer shim disposed within the first coating die and including a first insulating solution discharge port for discharging the first insulating solution, wherein the second coating device includes: a second coating die comprising a second discharge port for discharging the second electrode slurry; and a second spacer shim disposed within the second coating die and including a second insulating solution discharge port for discharging the second insulating solution, wherein the second spacer shim includes a protruding portion protruding outward from the second coating die.

In exemplary embodiments, the first coating die further includes a first die lip having the first discharge port, wherein the second coating die further includes a second die lip having the second discharge port, wherein the first spacer shim does not protrude from the first die lip of the first coating die, wherein the second spacer shim protrudes from the second die lip of the second coating die.

In exemplary embodiments, the second coating device further includes a coating roll supporting the substrate, wherein the distance between the second insulating solution discharge port of the second spacer shim and the coating roll is smaller than the distance between the second discharge port of the second coating die and the coating roll.

In exemplary embodiments, the second coating device further includes a body shim disposed within the second coating die, wherein the body shim includes a first side body and a second side body spaced apart by a manifold of the second coating die accommodating the second electrode slurry, wherein the second spacer shim is connected to either the first side body or the second side body.

In exemplary embodiments, the electrode manufacturing device further includes a drying device disposed between the first coating device and the second coating device and configured to dry the first electrode slurry and the first insulating solution applied onto the substrate.

### [Advantageous Effects]

According to exemplary embodiments of the present disclosure, since the spacer shim configured to discharge the insulating solution protrudes from the die lip of the coating die, the insulating coating gap provided between the insulating solution discharge port of the spacer shim and the substrate can be reduced, and the thickness of the insulating layer applied on the substrate can be reduced.

According to exemplary embodiments of the present disclosure, an electrode manufacturing process can be performed by sequentially carrying out a first coating process that applies a first electrode slurry layer and a first insulating layer on a first surface of the substrate, and a second coating process that applies a second electrode slurry layer and a second insulating layer on a second surface of the substrate. In the second coating device performing the second coating process, the spacer shim protrudes from the die lip of the coating die. This reduces the insulating coating gap, allowing the thickness of the second insulating layer to be reduced and the deviation between the thickness of the first insulating layer and the thickness of the second insulating layer to be minimized.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a perspective view showing a coating device according to exemplary embodiments of the present disclosure.
FIG. 2 is a separated perspective view showing a coating device according to exemplary embodiments of the present disclosure.
FIG. 3 is a cross-sectional view showing a coating device according to exemplary embodiments of the present disclosure.
FIG. 4 is a plan view showing a portion of the coating device according to exemplary embodiments of the present disclosure.
FIG. 5 is a cross-sectional view along line V-V' of FIG. 4.
FIG. 6 is a plan view showing a portion of the coating device according to exemplary embodiments of the present disclosure.
FIG. 7 is a cross-sectional view along line VII-VII' of FIG. 6.
FIG. 8 is a cross-sectional view showing a coating device according to exemplary embodiments of the present disclosure.
FIG. 9 is a cross-sectional view showing an electrode manufacturing device according to exemplary embodiments of the present disclosure.
FIG. 10 is a cross-sectional view showing the first coating device of the electrode manufacturing device.
FIG. 11 is a cross-sectional view schematically showing the coating process of the second coating device of the electrode manufacturing device.
FIG. 12 is a cross-sectional view showing a portion of the coating device of an electrode manufacturing device according to a comparative example.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

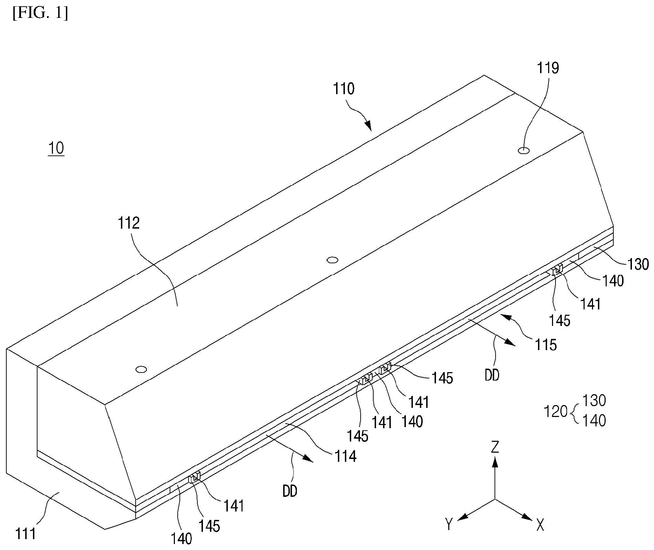

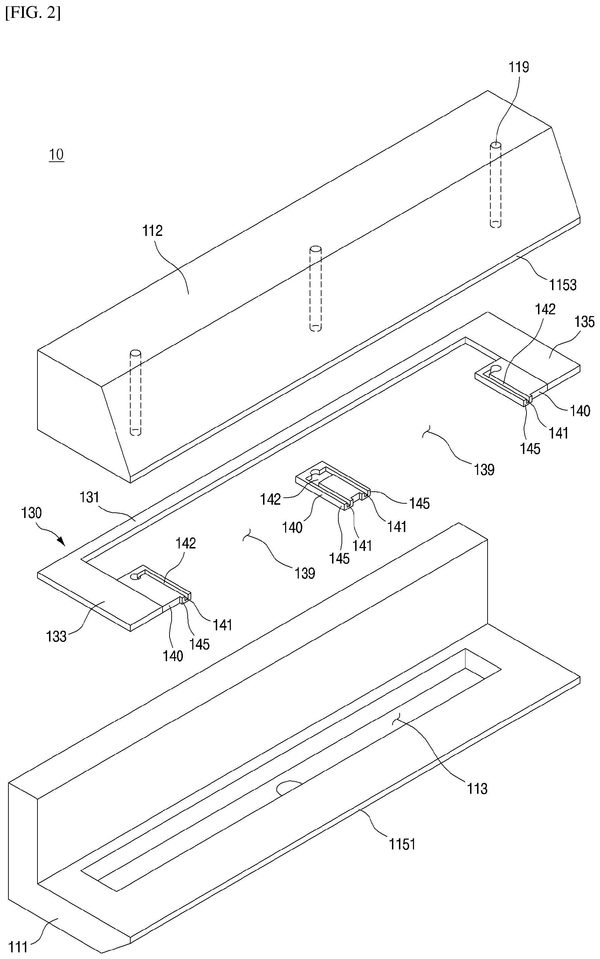

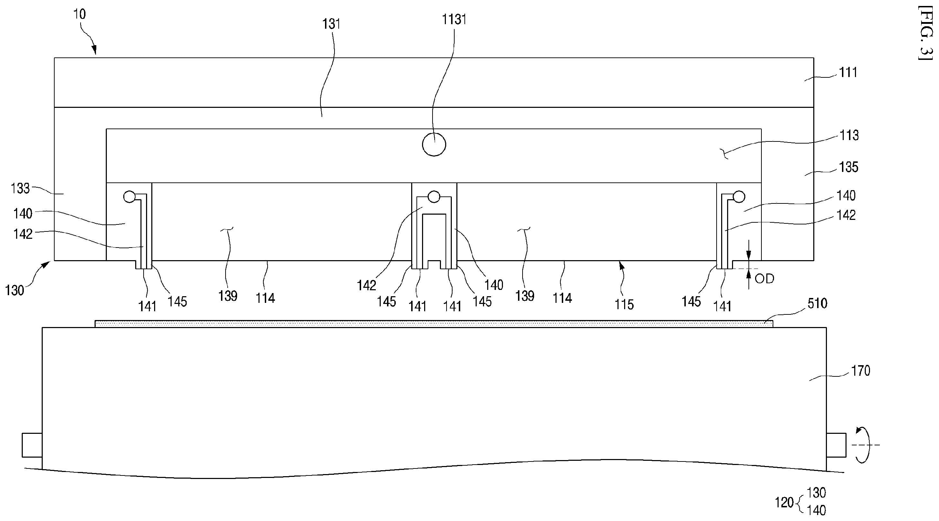

FIG. 1 is a perspective view showing a coating device 10 according to exemplary embodiments of the present disclosure. FIG. 2 is a separated perspective view showing the coating device 10 according to exemplary embodiments of the present disclosure. FIG. 3 is a cross-sectional view showing the coating device 10 according to exemplary embodiments of the present disclosure.

Referring to FIGS. 1 through 3, the coating device 10 can perform a coating process to manufacture electrodes for secondary batteries by applying a coating solution onto a substrate 510. The coating solution may include an electrode slurry and an insulating solution. The coating device 10 can discharge the electrode slurry and insulating solution toward the substrate 510 moving by the coating roll 170. The electrode slurry applied onto the substrate 510 becomes an electrode slurry layer, and the insulating solution applied onto the substrate 510 can become an insulating layer covering the side part of the electrode slurry layer. In this disclosure, the electrode slurry may be referred to as a first coating solution, and the insulating solution may be referred to as a second coating solution.

The substrate 510 may be a current collector. The collector may be a positive electrode current collector. For example, the positive electrode current collector may include stainless steel, aluminum, nickel, titanium, ductile carbon, etc. The current collector may be a negative electrode current collector. For example, the negative electrode current collector may include copper, stainless steel, nickel, titanium, baked carbon, etc.

The electrode slurry may include an electrode active material, a conductive material, a binder, and additives. The electrode active material may include a positive electrode active material or a negative electrode active material. For example, the positive electrode active material may include a lithium metal composite oxide containing nickel (Ni), cobalt (Co), and manganese (Mn). For example, the negative electrode active material may include one or more of a carbon material and a silicon material. The carbon material may refer to a carbon material having carbon atoms as its main component. The silicon material may be a particle containing silicon (Si) as its main component among metal components, and may include one or more of silicon (Si) particles and silicon oxide particles.

The insulating solution may contain inorganic particles, phenolic compounds, and a binder. For example, the inorganic particles may include one or more aluminum minerals selected from boehmite, gibbsite, diaspore, alunite, and nepheline. For example, the phenolic particles may enhance the dispersibility of the inorganic particles contained in the insulating solution. Such phenolic compounds include tannic acid, baicalein, luteolin, taxifolin, myricetin, quercetin, rutin, catechin, epigallocatechin gallate, butein, piceatannol, pyrogallic acid, ellagic acid, amylose, amylopectin, and xanthan gum.

In exemplary embodiments, the coating device 10 may be configured to simultaneously apply electrode slurry and insulating solution onto one surface of the substrate 510. The insulating solution may be applied onto the substrate 510 to cover both sides of the electrode slurry layer applied onto the substrate 510. The insulating solution, applied on the substrate 510 to cover both sides of the electrode slurry layer, can suppress or prevent a sliding phenomenon where the thickness of the electrode slurry layer gradually decreases at its outer periphery, and can reduce thickness deviation in the electrode slurry layer applied on the substrate 510.

The coating device 10 may include a coating die 110, a coating shim 120, and a coating roll 170.

The coating die 110 can receive electrode slurry and insulating solution from an external source. The coating die 110 can discharge the electrode slurry toward the substrate 510. The coating die 110 may include a discharge port 114 configured to discharge the electrode slurry. Hereinafter, a first direction (e.g., X-direction) is defined as a direction parallel to the discharge direction (DD) of the electrode slurry, a second direction (e.g., Y-direction) is defined as a direction perpendicular to the discharge direction (DD) of the electrode slurry, and a third direction (e.g., Z-direction) is defined as a direction perpendicular to both the first direction (e.g., X-direction) and the second direction (e.g., Y-direction).

The discharge port 114 of the coating die 110 may have a slit shape extending in the second direction (e.g., the Y-direction). The length of the discharge port 114 of the coating die 110 in the second direction (e.g., the Y-direction) may be greater than the length of the discharge port 114 of the coating die 110 in the third direction (e.g., the Z-direction). The discharge port 114 of the coating die 110 may be provided at a die lip 115 of the coating die 110 facing a substrate 510 supported on a coating roll 170.

The coating die 110 may include a first block 111 and a second block 112. The first block 111 may include a manifold 113 for accommodating the electrode slurry. The manifold 113 may include a space for accommodating the electrode slurry injected through the electrode slurry inlet 1131. The second block 112 may be coupled to the first block 111 to cover the manifold 113 of the first block 111. The die lip 115 of the coating die 110 may include a die lip 1151 of the first block 111 at the end of the first block 111 and a die lip 1153 of the second block 112 at the end of the second block 112. The discharge port 114 may be provided between the die lip 1151 of the first block 111 and the die lip 1153 of the second block 112.

A coating shim 120 may be disposed within the coating die 110. The coating shim 120 may be inserted into a space provided between the first block 111 and the second block 112. The coating shim 120 may provide an electrode slurry flow path 139 extending in a first direction (e.g., the X-direction) from the manifold 113 of the coating die 110 to the discharge port 114 of the coating die 110. The electrode slurry flow path 139 may convey electrode slurry from the manifold 113 of the coating die 110 to the discharge port 114 of the coating die 110.

The coating shim 120 may include a body shim 130 and a spacer shim 140.

The body shim 130 may be fastened to at least one of the first block 111 and the second block 112 by a fastening member such as a bolt. The body shim 130 may include a center body 131, a first side body 133, and a second side body 135. The center body 131 may be spaced apart from the discharge port 114 of the coating die 110 in a first direction (e.g., X-direction) with the manifold 113 interposed therebetween, and may extend along one edge of the manifold 113 in a second direction (e.g., Y-direction). The first side body 133 and the second side body 135 may be spaced apart in a second direction (e.g., the Y- ) with the manifold 113 in between. The first side body 133 may be connected to one end of the center body 131 and may extend in a first direction (e.g., the X-direction) from the center body 131 toward the die lip 115 of the coating die 110. The second side body 135 may be connected to the other end of the center body 131 and may extend from the center body 131 toward the die lip 115 of the coating die 110 in a first direction (e.g., X-direction).

The spacer shim 140 may be fastened to at least one of the first block 111 and the second block 112 by a fastening member such as a bolt. The spacer shim 140 may discharge the insulating solution toward the substrate 510. The spacer shim 140 may discharge the insulating solution in a direction substantially parallel to the discharge direction (DD) of the electrode slurry. The spacer shim 140 may include an insulating solution discharge port 141 configured to discharge the insulating solution and an insulating solution flow path 142 extending from the insulating solution discharge port 141. The second block 112 of the coating die 110 may have an internal flow path 119 communicating with the insulating solution flow path 142 of the spacer shim 140. Insulating solution supplied externally may be delivered to the insulating solution flow path 142 of the spacer shim 140 through the internal flow path 119 of the second block 112. The spacer shim 140 may be disposed between the manifold 113 and the die lip 115 of the coating die 110. The spacer shim 140 may define the width of the electrode slurry flow path 139 of the coating shim 120 in a second direction (e.g., the Y-direction) and the width of the discharge port 114 of the coating die 110 in a second direction (e.g., the Y-direction).

The coating device 10 may include a plurality of spacer shims 140 mounted on the coating die 110. The plurality of spacer shims 140 may be spaced apart from each other in the second direction (e.g., the Y-direction). In exemplary embodiments, a spacer shim 140 may be disposed on each side of the discharge port 114 of the coating die 110. In exemplary embodiments, a spacer shim 140 may be disposed on each side of the electrode slurry flow path 139 of the coating shim 120. In exemplary embodiments, the coating die 110 may include a plurality of discharge ports 114, and a spacer shim 140 may be disposed on each side of each discharge port 114. In exemplary embodiments, the coating shim 120 may include a plurality of electrode slurry flow paths 139, and a spacer shim 140 may be disposed on each side of each electrode slurry flow path 139.

In exemplary embodiments, the plurality of spacer shims 140 may include a first spacer shim connected to the first side body 133, a second spacer shim connected to the second side body 135, and a third spacer shim disposed between the first spacer shim and the second spacer shim. The third spacer shim may include two insulating solution discharge ports 141 spaced apart in a second direction (e.g., the Y-direction). In this case, the coating shim 120 may have a plurality of electrode slurry flow paths 139 separated by a plurality of spacer shims 140, and the coating die 110 may have a plurality of discharge ports 114 corresponding to the plurality of electrode slurry flow paths 139.

The spacer shim 140 may include a protruding portion 145 protruding outward from the coating die 110. The protruding portion 145 of the spacer shim 140 may protrude outward from the die lip 115 of the coating die 110 in the discharge direction (DD) of the electrode slurry. The protruding portion 145 of the spacer shim 140 may include a portion of the insulating solution flow path 142 and the insulating solution discharge port 141. The range of the offset distance (OD) by which the protruding portion 145 of the spacer shim 140 protrudes from the die lip 115 of the coating die 110 may be from several to several tens of micrometers. In exemplary embodiments, the offset distance (OD) may be between 10 micrometers and 100 micrometers. Because the spacer shim 140 has a protruding portion 145, the distance between the insulating solution discharge port 141 of the insulating solution coating shim 120 and the coating roll 170 may be smaller than the distance between the discharge port 114 of the coating die 110 and the coating roll 170, or the distance between the die lip 115 of the coating die 110 and the coating roll 170.

### (Second embodiment)

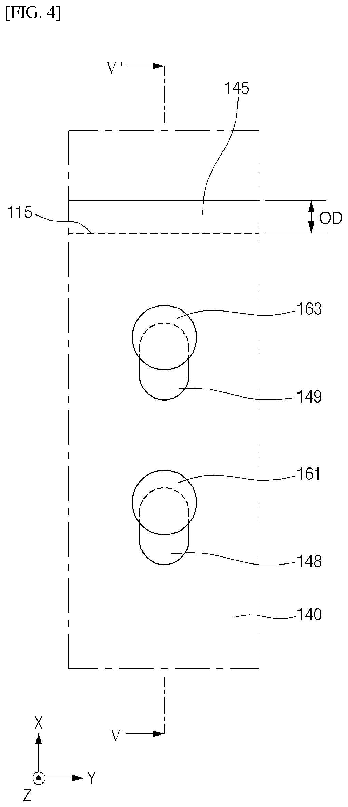

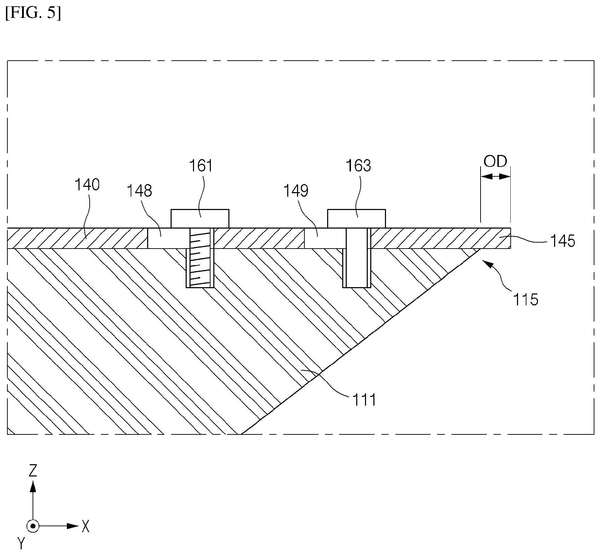

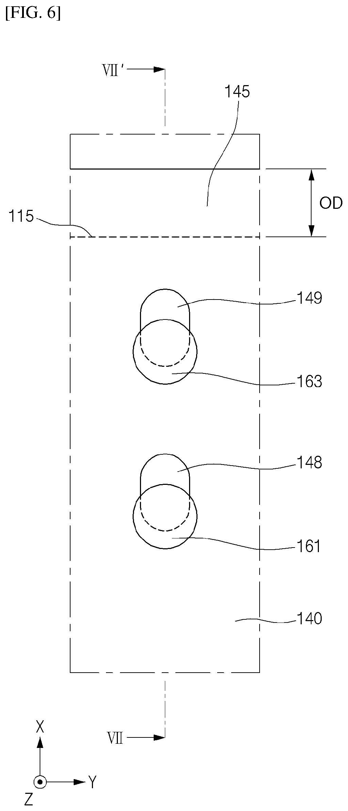

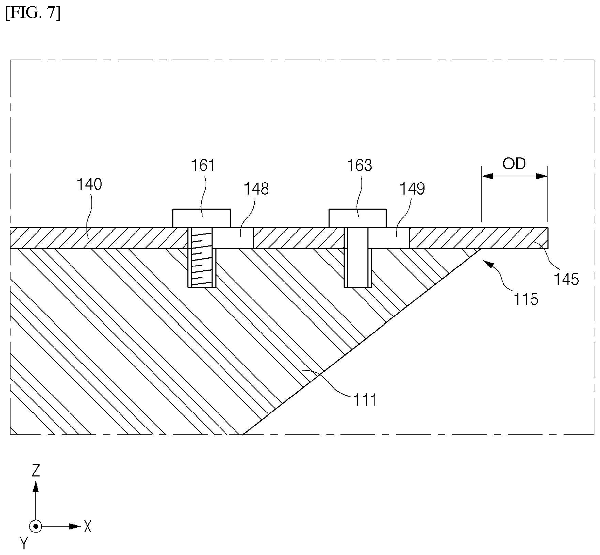

FIG. 4 is a plan view showing a portion of the coating device 10 according to exemplary embodiments of the present disclosure. FIG. 5 is a cross-sectional view along line V-V' of FIG. 4. FIG. 6 is a plan view showing a portion of the coating device 10 according to exemplary embodiments of the present disclosure. FIG. 7 is a cross-sectional view along line VII-VII' of FIG. 6.

Referring to FIGS. 4 through 7 together with FIGS. 1 through 3, the spacer shim 140 can be fastened and fixed to the first block 111 by at least one fastening member (e.g., a fixing pin 163 and a bolt 161).

In exemplary embodiments, the spacer shim 140 can be fastened and fixed to the first block 111 by a bolt 161 and a fixing pin 163. The spacer shim 140 may include a hole 148 into which the bolt 161 is inserted and a pin hole 149 into which the fixing pin 163 is inserted. The hole 148 may be aligned with a hole in the first block 111, and the pin hole 149 may be aligned with a hole in the first block 111. The bolt 161 may be inserted and fastened through the hole 148 of the spacer shim 140 into the hole of the first block 111. The outer circumferential surface of the bolt 161 may have threads that engage with threads provided on the inner circumferential surface of the hole in the first block 111. The fixing pin 163 can be inserted into the hole in the first block 111 through the pin hole 149 in the spacer shim 140. When mounting the spacer shim 140 onto the first block 111, after aligning and fixing the spacer shim 140 at the target position using the fixing pin 163, the spacer shim 140 can be fastened to the first block 111 using the bolt 161.

In exemplary embodiments, the hole 148 and pin hole 149 of the spacer shim 140 may each be a slot hole having a long axis parallel to a first direction (e.g., the X-direction) and a short axis parallel to a second direction (e.g., the Y-direction). That is, the length of the hole 148 along the first direction (e.g., the X-direction) may be greater than the length of the hole 148 along the second direction (e.g., the Y-direction), and the length of the pin hole 149 along the first direction (e.g., the X-direction) may be greater than the length of the pin hole 149 along the second direction (e.g., the Y-direction). When the hole 148 and pin hole 149 of the spacer shim 140 are slot holes, the relative position between the bolt 161 and the hole 148 and the relative position between the fixing pin 163 and the pin hole 149 can be adjusted to control the offset distance (OD) by which the protruding portion 145 of the spacer shim 140 protrudes from the die lip 115 of the coating die 110.

### (Third embodiment)

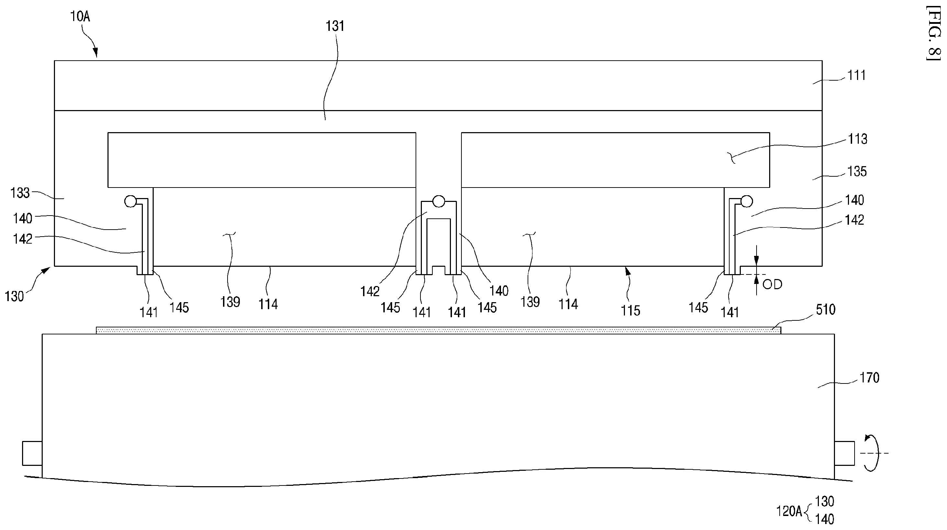

FIG. 8 is a cross-sectional view showing a coating device 10A according to exemplary embodiments of the present disclosure. Herein, the coating device 10A shown in FIG. 8 is described, focusing on the differences from the coating device 10 described with reference to FIGS. 1 to 3.

Referring to FIG. 8, in the coating device 10A, the coating shim 120A may have a single integrated structure where the body shim 130 and a plurality of spacer shims 140 form a single unit. The plurality of spacer shims 140 may include a portion connected to the first side body 133, a portion connected to the second side body 135, and a portion connected to the center part of the center body 131.

### (Fourth embodiment)

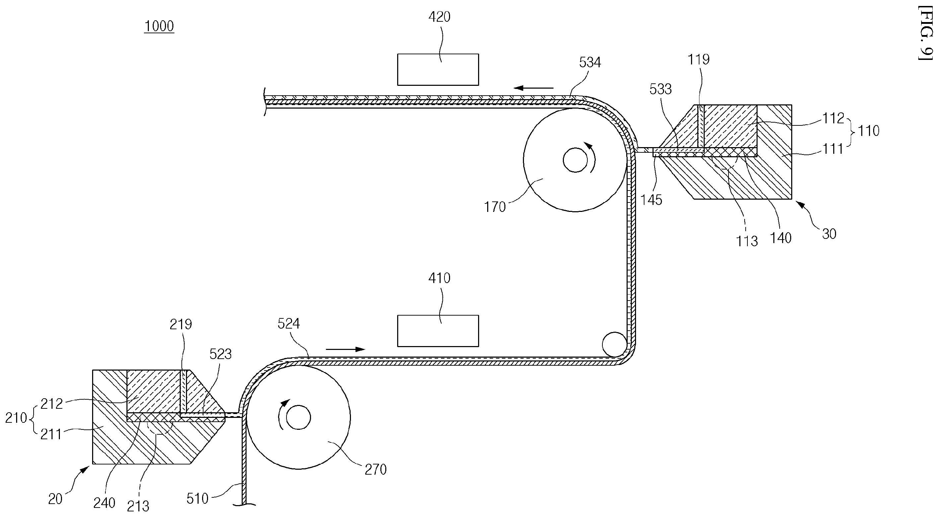

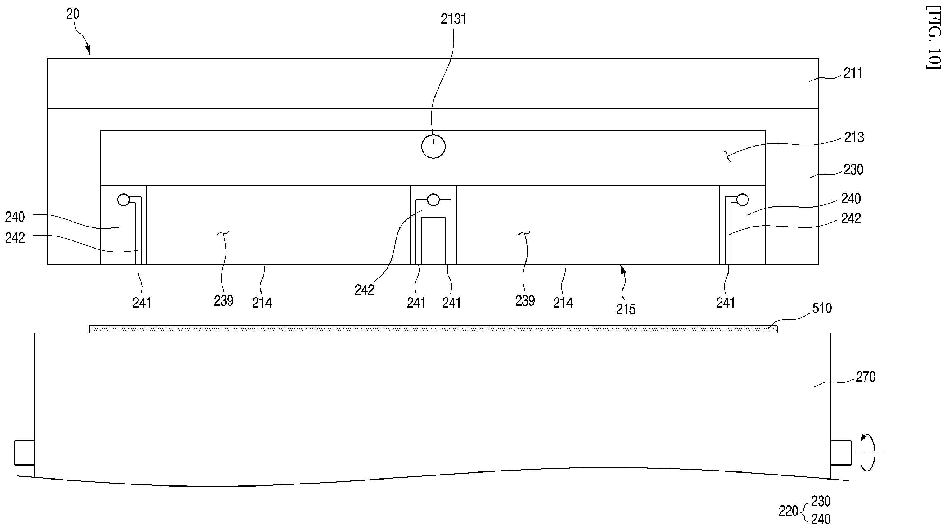

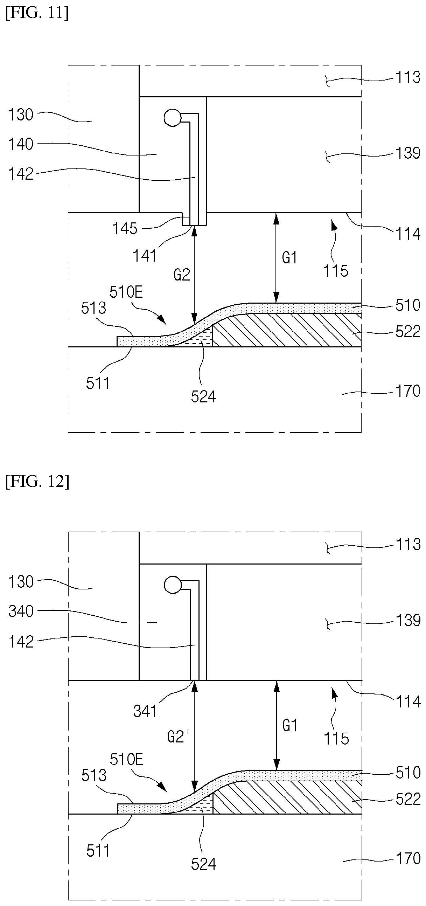

FIG. 9 is a cross-sectional view illustrating an electrode manufacturing device 1000 according to exemplary embodiments of the present disclosure. FIG. 10 is a cross-sectional view showing the first coating device 20 of the electrode manufacturing device 1000. FIG. 11 is a cross-sectional view schematically showing the coating process of the second coating device 30 of the electrode manufacturing device 1000.

Referring to FIGS. 9 through 11, the electrode manufacturing device 1000 may include a first coating device 20, a second coating device 30, a first drying device 410, and a second drying device 420.

The first coating device 20 can perform a first coating process to form a first electrode slurry layer and a first insulating layer 524 by discharging a first electrode slurry and a first insulating solution 523 toward a first surface 511 of a substrate 510. The first electrode slurry applied onto the first surface 511 of the substrate 510 becomes the first electrode slurry layer 522, and the first insulating solution 523 applied onto the first surface 511 of the substrate 510 can become the first insulating layer 524.

The first coating device 20 may include a coating die 210, a coating shim 220, and a coating roll 270. The die lip 215 of the coating die 210 may be provided with a discharge port 214 for discharging the first electrode slurry. The coating die 210 may include a first block 211 and a second block 212. The first block 211 may include an inlet 2131 into which the first electrode slurry is injected and a manifold 213 for accommodating the first electrode slurry. The second block 212 may include an internal flow path 219 for conveying the first insulating solution 523. A coating shim 220 may be disposed between the first block 211 and the second block 212. The coating shim 220 may include a body shim 230 and a spacer shim 240. The coating shim 220 may extend between the discharge port 214 and the manifold 213 and may include an electrode slurry flow path 239 for guiding the first electrode slurry. The spacer shim 240 may include an insulating solution discharge port 241 from which the first insulating solution 523 is discharged and an insulating solution flow path 242 extending from the insulating solution discharge port 241. The spacer shim 240 may not protrude from the die lip 215 of the coating die 210. The first coating device 20 may be substantially identical or similar to the coating device 10 described with reference to FIGS. 1 through 3, except that the insulating solution coating shim 220 of the coating shim 220 does not protrude from the coating die 210.

The second coating device 30 may perform a second coating process to form a second electrode slurry layer and a second insulating layer 534 by discharging the second electrode slurry and a second insulating solution 533 toward a second surface 513 of the substrate 510. The second electrode slurry applied onto the second surface 513 of the substrate 510 becomes the second electrode slurry layer, and the second insulating solution applied onto the second surface 513 of the substrate 510 can become the second insulating layer 534. The second coating device 30 may be substantially identical to the coating device 10 described with reference to FIGS. 1 through 3.

The first coating device 20 and the second coating device 30 may be disposed sequentially along the direction of movement of the substrate 510. The substrate 510 on which the first coating process is completed at the first coating device 20 may be transferred to the second coating device 30, and the second coating device 30 may perform the second coating process on the substrate 510 on which the first coating process is completed.

A first drying device 410 may be positioned between the first coating device 20 and the second coating device 30. The first drying device 410 may be configured to dry the first electrode slurry and the first insulating solution 523 applied onto the first surface 511 of the substrate 510. The second drying device 420 may be disposed in the path of the substrate 510 as it passes through the second coating device 30. The second electrode device may be configured to dry the second electrode slurry and second insulating solution 533 applied to the second surface 513 of the substrate 510. The first drying device 410 and second drying device 420 may include a heat source configured to apply heat to the electrode slurry and insulating solution.

Upon completion of the first coating process to form the first electrode slurry layer 522 and the first insulating layer 524, the first insulating layer 524 may be formed to have a thickness smaller than that of the first electrode slurry layer 522. When a second coating process is performed after the first coating process, the first surface 511 of the substrate 510, the first electrode slurry layer 522, and the first insulating layer 524 may be pressed against the coating roll 170. Since the thickness of the first insulating layer 524 is smaller than the thickness of the first electrode slurry layer 522, the second surface 513 of the substrate 510 may extend downwardly at an incline at the edge part 510E of the substrate 510 in contact with the first insulating layer 524. In this case, the distance between the edge part 510E of the substrate 510 and the die lip 115 of the coating die 110 increases compared to the distance between the portion of the substrate 510 in contact with the first electrode slurry layer 522 and the die lip 115 of the coating die 110.

FIG. 12 is a cross-sectional view showing a portion of the coating device of the electrode manufacturing device according to a comparative example.

Referring to FIG. 12, the coating device of the electrode manufacturing device according to the comparative example can receive a substrate 510 on which a first coating process has been completed, and perform a second coating process to discharge a second electrode slurry and a second insulating solution toward a second surface 513 of the substrate 510 to form a second electrode slurry layer and a second insulating layer. In the coating device of the electrode manufacturing device according to the comparative example, the spacer shim 340 having the insulating solution discharge port 341 does not protrude from the die lip 115 of the coating die. When the spacer shim 340 does not protrude from the die lip 115 of the coating die, the insulating coating gap G2' provided between the insulating solution discharge port 341 of the spacer shim 340 and the substrate 510 may locally increase due to the slope of the edge part 510E of the substrate 510. The insulating coating gap G2' may be larger than the coating gap G1 provided between the discharge port 114 and the substrate 510. The increase in the insulating coating gap G2' may increase the thickness of the second insulating layer formed by the second insulating solution, and may cause unevenness between the thickness of the first insulating layer 524 applied on the first surface 511 of the substrate 510 and the thickness of the second insulating layer 534 applied on the second surface 512 of the substrate 510.

Referring to FIGS. 9 through 11, in exemplary embodiments, the spacer shim 140 configured to discharge the second insulating solution 533 protrudes from the die lip 115 of the coating die 110, allowing the spacer shim 140 to reduce the insulating coating gap G2 provided between the insulating solution discharge port 141 of the spacer shim 140 and the substrate 510, and to reduce the thickness of the second insulating layer 534 formed from the second insulating solution 533.

According to exemplary embodiments of the present disclosure, an electrode manufacturing process may be performed by sequentially performing a first coating process of applying a first electrode slurry layer 522 and a first insulating layer 524 on a first surface 511 of the substrate 510, and a second coating process of applying a second electrode slurry layer and a second insulating layer 534 on a second surface 513 of the substrate 510. Because the spacer shim 140 protrudes from the die lip 115 of the coating die 110 in the second coating device 30 performing the second coating process, the thickness of the second insulating layer 534 can be decreased by reducing the insulation coating gap G2, thereby reducing the deviation between the thickness of the first insulating layer 524 and the thickness of the second insulating layer 534.

The present disclosure has been described in detail above with reference to the drawings and embodiments. However, the configurations described in the drawings or embodiments of the present specification are merely one embodiment of the present disclosure and do not represent all of the technical ideas of the present disclosure. Therefore, it should be understood that various equivalents and modifications may be made to the present disclosure at the time of filing this application.

## Claims

1. A coating device comprising:
a coating die comprising a first discharge port for discharging a first coating solution; and
a first shim disposed within the coating die and comprising a second discharge port for discharging a second coating solution, wherein
the first shim comprises a protruding portion protruding outside the coating die.

2. The coating device of claim 1, wherein
the first shim further comprises a first flow path connected to the second discharge port of the first shim, wherein
a portion of the first flow path of the first shim and the second discharge port are located within the protruding portion of the first shim.

3. The coating device of claim 2, wherein
the coating die further comprises an internal flow path for conveying the second coating solution provided from outside into the first flow path of the first shim.

4. The coating device of claim 1, wherein
the coating die comprises a die lip having the first discharge port, wherein
the protruding portion of the first shim protrudes from the die lip of the coating die.

5. The coating device of claim 1, further comprising
a coating roll supporting a substrate onto which the first coating solution and the second coating solution are applied, wherein
the distance between the second discharge port of the first shim and the coating roll is smaller than the distance between the first discharge port of the coating die and the coating roll.

6. The coating device of claim 1, wherein
the distance by which the first shim protrudes outside the coating die is between 10 micrometers and 100 micrometers.

7. The coating device of claim 1, wherein
the first shim comprises a hole into which a fastening member configured to fasten the first shim to the coating die is inserted, wherein
the length of the first shim along a first direction of the hole is greater than the length of the first shim along a second direction of the hole, wherein
the first direction is parallel to the discharge direction of the first coating solution, and the second direction is perpendicular to the first direction.

8. The coating device of claim 1, further comprising
a second shim disposed within the coating die, wherein
the second shim comprises a first side body and a second side body spaced apart by a manifold of the coating die accommodating the first coating solution, wherein
the first shim is connected to either the first side body or the second side body.

9. The coating device of claim 8, wherein
the second shim and the first shim form an integral unit.

10. The coating device of claim 1, wherein
the first coating solution is an electrode slurry, and
the second coating solution is an insulating solution.

11. An electrode manufacturing device comprising:
a first coating device configured to discharge a first electrode slurry and a first insulating solution toward a first surface of a substrate; and
a second coating device configured to discharge a second electrode slurry and a second insulating solution toward a second surface of the substrate, wherein
the first coating device comprises:
a first coating die comprising a first discharge port for discharging the first electrode slurry; and
a first spacer shim disposed within the first coating die and comprising a first insulating solution discharge port for discharging the first insulating solution, wherein
the second coating device comprises:
a second coating die comprising a second discharge port for discharging the second electrode slurry; and
a second spacer shim disposed within the second coating die and comprising a second insulating solution discharge port for discharging the second insulating solution, wherein
the second spacer shim comprises a protruding portion protruding outward from the second coating die.

12. The electrode manufacturing device of claim 11, wherein
the first coating die further comprises a first die lip having the first discharge port, wherein
the second coating die further comprises a second die lip having the second discharge port, wherein
the first spacer shim does not protrude from the first die lip of the first coating die, wherein
the second spacer shim protrudes from the second die lip of the second coating die.

13. The electrode manufacturing device of claim 11, wherein
the second coating device further comprises a coating roll supporting the substrate, wherein
the distance between the second insulating solution discharge port of the second spacer shim and the coating roll is smaller than the distance between the second discharge port of the second coating die and the coating roll.

14. The electrode manufacturing device of claim 11, wherein
the second coating device further comprises a body shim disposed within the second coating die, wherein
the body shim comprises a first side body and a second side body spaced apart by a manifold of the second coating die accommodating the second electrode slurry, wherein
the second spacer shim is connected to either the first side body or the second side body.

15. The electrode manufacturing device of claim 11, further comprising
a drying device disposed between the first coating device and the second coating device and configured to dry the first electrode slurry and the first insulating solution applied onto the substrate.
